# EUROPEAN PATENT APPLICATION

(11) **EP 2 345 707 A1**
(43) Date of publication of application: **20.07.2011**
(21) Application number: 10196471.6
(22) Date of filing: 22.12.2010
(51) Int. Cl.: C09J 7/02

(54) **Double-sided pressure-sensitive adhesive sheet**

(30) Priority: 22.12.2009 JP 2009290345
(71) Applicant: NITTO DENKO CORPORATION, Ibaraki-shi, Osaka 567-8680 (JP)
(72) Inventor: Shirai, Mitsuyoshi, Ibaraki-shi Osaka 567-8680 (JP); Takahashi, Akiko, Ibaraki-shi Osaka 567-8680 (JP); Wada, Shouhei, Ibaraki-shi Osaka 567-8680 (JP); Kobayashi, Mutsumi, Ibaraki-shi Osaka 567-8680 (JP)
(74) Representative: Grünecker, Kinkeldey, Stockmair & Schwanhäusser Anwaltssozietät

(57) **Abstract**

A double-sided pressure-sensitive adhesive (PSA) sheet 11 has, on each side of a plastic film substrate 1, a PSA layer 3 provided through an undercoat layer 2 containing a compound having an oxazoline group. The PSA layer 3 is formed from a water-dispersed PSA composition. This PSA composition contains an acrylic polymer synthesized by emulsion polymerization of a monomer raw material containing an alkyl(meth)acrylate and a carboxyl group-containing monomer, and a water-dispersed tackifier at a mass ratio of 100:5 to 100 based on solid content. The toluene emission when this PSA sheet is kept at 80°C for 30 minutes is 20 µg or less per gram of the sheet.

## Description

### BACKGROUND OF THE INVENTION

### 1. Field of the Invention

The present invention relates to a double-sided pressure-sensitive adhesive (hereinafter referred to as PSA) sheet having a PSA layer comprising a water-dispersed acrylic PSA composition.

This application claims priority to Japanese Patent Application No. 2009-290345 filed on December 22, 2009, the entire contents of which are incorporated herein by reference.

### 2. Description of the Related Art

Double-sided PSA sheets (also known as two-sided PSA sheets, double-faced PSA sheets or double-stick sheets) provided with a substrate are widely used as a bonding means with good workability and highly reliable adhesion in various industrial fields such as from home appliances to automobile and OA equipments. Acrylic polymers are preferably used as a PSA constituent. Examples of background art documents relating to acrylic PSA include Japanese Patent Application Publication Nos. 2005-23293, H7-133467 and 2000-109754.

Meanwhile, from such points of view as consideration for the environment and reducing emission of volatile organic compounds (VOCs), the tendency is to prefer the use of a water-dispersed (water-based) PSA composition, a morphology in which a PSA constituent is dispersed in water. Consequently, it would be beneficial to provide a double-sided PSA sheet having a PSA layer formed from a water-dispersed acrylic PSA composition.

### SUMMARY OF THE INVENTION

However, in general, anchoring ability (anchoring strength, tight adhesiveness and the like) against a substrate tends to be weak for a PSA layer that is formed from a water-dispersed acrylic PSA composition (hereinafter also referred to as water-dispersed PSA layer) compared to a PSA layer formed from a solvent-type PSA composition (hereinafter also referred to as solvent-type PSA layer). Therefore, when removing (re-detaching) from an adherend, a double-sided PSA sheet provided with a water-dispersed PSA layer over a substrate sometimes gives rise to inconveniences of PSA residues (adhesive deposits) remaining on the adherend surface. This becomes a factor, for instance, when parts that are bonded with a double-sided PSA sheet are disassembled and recovered with the purpose of reusing or the like, which noticeably decreases the operation efficiency thereof. In particular, an adhesive deposit occurs readily with a double-sided PSA sheet having a constitution in which a plastic film is used as a substrate, compared to a double-sided PSA sheet having a porous material such as a non-woven fabric as a substrate.
As a method for increasing the anchoring ability of PSA against a plastic film, surface modification of the plastic film by corona discharge treatment or the like, is known. However, in the field of double-sided PSA sheets provided with a water-dispersed PSA layer on each side of a plastic film substrate (especially double-sided PSA sheets from which achieving both high adhesive strength and re-detaching ability is demanded, such as double-sided PSA sheets for bonding parts that are planned for re-use), further improvements are sought from the point of view of suppressing adhesive deposits.

It is an object of the present invention to provide a double-sided PSA sheet, which, while using a water-dispersed acrylic PSA composition, leaves little adhesive deposit on the adherend when re-detached.

The inventors of the present invention discovered that the anchoring ability of a water-dispersed PSA layer could be improved by conferring a coating containing a prescribed compound to a plastic film substrate surface, thereby leading to completion of the present invention.
Note that in the techniques disclosed herein, the anchoring ability of a PSA layer against a substrate may be understood as the difficulty to (resistance to) be peeled off from a substrate.

The present invention provides a double-sided PSA sheet including: a plastic film substrate; and a PSA layer provided on each side of the substrate. An undercoat layer (coating) formed from a water-based undercoat agent containing a compound having an oxazoline group (hereinafter may also be referred to as compound (a)) is provided on each side of the substrate, and the PSA layer is provided over this undercoat layer. The thickness of the substrate is in the range of 1 µm to 300 µm. The PSA layer is formed from a water-dispersed PSA composition, and this water-dispersed PSA composition contains a water-dispersed acrylic polymer synthesized by emulsion polymerization of a monomer raw material containing alkyl(meth)acrylate as a main monomer and a carboxyl group-containing monomer (hereinafter may also be referred to as monomer (β)), and a water-dispersed tackifier (a water dispersion of a tackifier), so that the mass ratio based on solid content between the acrylic polymer and the tackifier is 100:5 to 100. In addition, the PSA sheet satisfies the following property (A):
(A) when the PSA sheet is kept at 80°C for 30 minutes, the amount of toluene emitted from the sheet is 20 µg or less per gram of the sheet.

According to such a constitution, an oxazoline group contained in compound (a) within the undercoat layer reacts with a carboxyl group derived from monomer (β) present within the PSA layer, increasing the level of adhesion (level of tight adhesion) at the boundary surface between the undercoat layer and the PSA layer. This anchors the PSA layer firmly onto the substrate, which may render the occurrence of adhesive deposit at re-detachment time less likely. Furthermore, since the PSA sheet uses a water-dispersed PSA composition while the composition contains a tackifier at the prescribed proportion described above, it may demonstrate high adhesive strength against an adherend. That is to say, a double-sided PSA sheet may be provided, which achieves at a high level the conflicting properties of both re-detaching ability and strong PSA ability. Thus, it is desirable, for instance, as a double-sided PSA sheet for fixing a part that is planned for recycling. Furthermore, since it has the property (A) and a low toluene emission, it is desirable as a double-sided PSA sheet, for fixing recyclable parts constituting products used in a room, in particular such as automobile interior materials, building materials and OA equipments.

In one preferred mode of the double-sided PSA sheet disclosed herein, in addition to the property of (A) described above, both following properties are further satisfied:
(B) 180° peel strength against stainless steel plate is 10 N/20 mm or greater, and
(C) no adhesive deposit is present on a stainless steel plate in an anchoring ability test under which the PSA sheet is attached to the stainless steel plate and maintained at 80°C for one hour, cooled to room temperature, and then peeled at 30 m/minute peel speed and 180° peel angle.
A double-sided PSA sheet having such properties is desirable, as it may achieve with a higher degrees of balance both an adhesive strength desirable for bonding or fixing a part and an excellent re-detaching ability that is not prone to give rise to adhesive deposit at re-detaching time.

In another preferred mode of the double-sided PSA sheet disclosed herein, the thickness of the undercoat layer is 0.01 µm or greater and less than 3 µm. This allows the anchoring onto the substrate to be stronger without compromising the PSA properties of the PSA layer described above.

In another preferred mode, the PSA sheet further satisfies at least one among the following properties (D) to (F). This may provide a PSA sheet having better re-detaching ability.
(D) the undercoat layer has a water contact angle of 0 degrees to 90 degrees.
(E) the substrate has a breaking strength of 130 MPa to 500 MPa.
(F) the substrate has an elongation at break of 50% to 300%.

In another preferred mode, above-mentioned substrate is made of a polyester film. Since the polyester film has a suitable degrees of strength (firmness) and heat resistance, it may be adopted preferably as a substrate of a PSA sheet that may be placed in a high temperature environment (working environment, environment of use, and the like) and in addition may be re-detached.

In another preferred mode, the PSA composition contains an acrylic polymer synthesized by emulsion polymerization using an azo initiator as a polymerization initiator.

In another preferred mode, the PSA sheet satisfies, in addition, at least one among the following properties (G) to (H):
(G) when the PSA sheet is kept at 80°C for 30 minutes, the amount of ethyl acetate emitted from the sheet is 20 µg or less per gram of the sheet.
(H) when the PSA sheet is kept at 80°C for 30 minutes, the total amount of volatile organic compounds emitted from the sheet is 500 µg or less per gram of the sheet.
In this way, a PSA sheet in which not only toluene emission but also ethyl acetate emission and/or the amount of total volatile organic compounds (Total VOCs; TVOC) have been reduced is more desirable for environmental sanitation and may be used preferably in applications for bonding or fixing members of products used in a closed space such as interior materials for automobile and homes, of products requiring work at high temperature, and of products that may heat highly during use, and the like.

### BRIEF DESCRIPTION OF THE DRAWINGS

Fig. 1 is a cross-sectional view showing schematically an example of a PSA sheet according to the present invention;
Fig. 2 is a cross-sectional view showing schematically another example of a PSA sheet according to the present invention; and
Fig. 3 is a cross-sectional view showing schematically the method for evaluating the contour-following ability.

### DETAILED DESCRIPTION OF THE INVENTION

Preferred embodiments of the present invention will be described below. Technical matters necessary to practice the invention, other than those specifically referred to in the present description, may be understood as design matters for a person skilled in the art that are based on the related art in the pertinent field. The present invention may be practiced based on the contents disclosed herein and common general technical knowledge in the pertinent field. In the following description, like reference numerals are assigned to members or sites producing like effects, and duplicated descriptions are sometimes omitted or simplified.

The double-sided PSA sheet of the present invention has, in addition to a substrate and a PSA layer, an undercoat layer containing a compound (a) that has an oxazoline group. It may be a double-sided PSA sheet of a morphology having an undercoat layer on each side of a substrate sheet, and, layered over each undercoat layer, a PSA layer formed from a water-dispersion of an acrylic PSA composition. The concept of PSA sheet herein includes those referred to as PSA tape, PSA label, PSA film and the like. Note that the PSA layer is not limited to those formed continuously and the PSA layer may be formed in a regular or random pattern of, for instance, dots, stripes or the like. In addition, the PSA sheet provided by the present invention may be in roll form or in sheet (spread) form. Alternatively, the PSA sheet may be of morphologies that have been further processed into a variety of shapes.

A plastic film can be used as a substrate of the PSA sheet disclosed herein. As the plastic film, for instance, a single body of a film made of polyester (polyethylene terephthalate (PET) or the like), polyolefin (polyethylene, polypropylene, ethylene-propylene co-polymers and the like), resistant resin such as polyimide resin, polyamide resin, polyacetate resin and the like, or a composite thereof, may be cited. In addition, woven fabric and non-woven fabric of fibers comprising the same materials, or these impregnated with epoxy resin or the like may be used. As particularly preferred examples, polyester films (polyethylene terephthalate (PET) or the like) may be cited. The plastic film may be any of a non-stretched film, a uniaxially stretched films and a biaxially stretched film.

The thickness of the plastic film substrate can be about 1 µm to 300 µm. The thickness of the substrate is more preferably about 1 µm to 250 µm and even more preferably about 1 µm to 200 µm (for instance, 10 µm to 100 µm). If the thickness of the substrate is smaller than 1 µm, there is insufficient strength, sometimes giving rise to issues such as handling becoming difficult due to stretching at attaching time, and tearing or shredding (breaking) occurring at attaching time and re-detaching time. In addition, if the thickness of the substrate is greater than 300 µm, the contour-following ability when attaching to a curved surface decreases, sometimes leading to the sheet being peeled off from the adherend if there is a curve or a step on the bonding surface.

It is desirable that the breaking strength of the substrate is in a range that is on the order of 130 MPa to 500 MPa (property (E)). The breaking strength is more preferably about 140 MPa to 480 MPa (even more preferably 150 MPa to 460 MPa). If the breaking strength is smaller than 130 MPa, there is insufficient strength, sometimes leading to stretching occurring more readily at attaching time and decreasing handling ability, or tearing and shredding (breaking) occurring more readily at attaching time and re-detaching time. In addition, if greater than 500 MPa, the contour-following ability decreases, the sheet sometimes becoming readily peeled off when attached to a curved surface.

It is desirable that the elongation at break of the substrate is in a range that is on the order of 50 to 300% (property (F)). The elongation at break is more preferably about 60 to 270% (even more preferably 70 to 250%). If the elongation at break is smaller than 50%, the contour-following ability is sometimes not sufficient. In addition, if greater than 300%, sometimes stretching occurs at attaching time or re-detaching time, decreasing handling ability.

While a strong adhesive strength for fixing a part, or the like, is demanded of the double-sided PSA sheet, if the adhesive strength becomes high, at re-detaching time, the sheet becomes sometimes excessively stretched or shredded, decreasing the handling ability (workability at re-detaching time) thereof. A plastic film having the above breaking strength and/or elongation at break is desirable as it may be used in combination with a PSA layer with a strong adhesiveness (for instance 10 N/20 mm or greater and preferably 13 N/20 mm or greater) to constitute a double-sided PSA sheet having satisfactory adhesive strength for bonding of parts and a more excellent handling ability at re-detaching time.

Note that the PSA sheet disclosed herein may preferably further satisfy the following property (I):
(I) In the contour-following ability test described below, the length (a+b) of the PSA sheet peeled from the surface of a glass cylinder is 50 mm or less (preferably zero).
   A double-sided PSA sheet having such a property is desirable since, even if a curve or a step exists on the bonding surface of the part to be fixed (adherend), it does not become peeled from the adherend readily.

When submitting the substrate to a process of conferring an undercoat layer, the surface may remain untreated, or the surface modification may have been applied by corona discharge treatment, plasma treatment or the like. It is desirable that each side of the substrate is modified by corona discharge treatment.
In addition, to the extent that the effect of the present invention is not compromised significantly, printing or coloring may be performed on one side or both sides of the substrate.

The undercoat layer provided on each side of the substrate is formed from a water-based undercoat agent containing at least a compound (a) having an oxazoline group. Typically, the compound (a) is a resin that contains an oxazoline group, and for instance, resins of the acrylic and urethane that has an oxazoline group in the side chain, and the like, may be cited. As long as it is water-based, the undercoat agent containing the compound (a) may be either water-dispersed (water-based emulsion or the like) or water soluble. As water-dispersed undercoat agents that are commercialized, product names "EPOCROS K-2000" series, "EPOCROS K-1000" series and "EPOCROS K-3000" series manufactured by Nippon Shokubai Co., LTD., and the like, may be cited. As water-soluble undercoat agents that are commercialized, "EPOCROS WS-700", "EPOCROS WS-500", and the like, may be cited. Use of water-dispersed undercoat agent is desirable from the points of view of improving the water-resistance of the undercoat layer after drying and improving the adhesive properties of the PSA layer above the undercoat layer.

When applying (typically, coating) such an undercoat agent to the substrate to form an undercoat layer, methods that are well known or in common use can be adopted. For instance, forming the layer is possible by applying the agent directly on each side of the substrate using an applicator such as a wire bar, a spray coater, a fountain die coater, a lip coater, a closed edge die coater, a gravure roll coater, a reverse roll coater, a kiss roll coater, a dip roll coater, a bar coater or a knife coater, and drying. While the undercoat layer is typically formed continuously, this is not a limitation, and the layer may be formed in a regular or random pattern of, for instance, dots, stripes or the like.

It is desirable that the thickness of the undercoat layer after drying is 0.01 µm or greater and less than 3 µm (more preferably on the order of 0.02 µm to 2 µm and even more preferably on the order of 0.03 µm to 1 µm). This allows the anchoring ability against the substrate (tight adhesiveness) and the adhesive properties against the adherend (adhesiveness or the like) of the PSA layer to be realized in a well balanced manner. If the thickness of the undercoat layer is too small, sometimes the effect of improving the anchoring ability of the PSA layer cannot be obtained sufficiently. In addition, even if the thickness of the undercoat layer is enlarged excessively, a further effect of improving the anchoring ability is difficult to obtain, and rather, the balance between the anchoring ability and the adhesive properties is sometimes broken. If the thickness of the undercoat layer is in the range of 0.02 µm to 2 µm, the effect of improving the anchoring ability may be realized more stably. Note that herein, the "anchoring ability of the PSA layer" may also be understood as the anchoring strength of the undercoat layer against the PSA layer.

It is desirable that the water contact angle of the undercoat layer is in a range of about 0 degrees to 90 degrees (typically about 60 degrees to 90 degrees) as measured by the droplet method (property (D)). For this water contact angle, a water droplet is dropped on the undercoat layer and the value measured 10 seconds after the droplet has landed is adopted. The water contact angle means the angle (contact angle) formed by the surface of the water droplet that landed onto the undercoat layer and the substrate surface in contact with the water droplet (base of the water droplet). It is more desirable that the water contact angle is in a range of about 0 degrees to 88 degrees (for instance, about 70 degrees to 88 degrees). Such an undercoat layer raises the anchoring ability of the water-dispersed PSA layer, and a PSA sheet may be formed, having excellent adhesive properties and even less readily generating a adhesive deposit at re-detaching time (for instance, in the anchoring ability test described below, no adhesive deposit on the stainless steel plate is generated (in other words, adhesive deposit surface area is substantially 0%)). Note that such a contact angle can be measured with an automatic contact angle meter.

To the extent that the effects of the present invention is not seriously compromised, the undercoat agent may contain, in addition to the compound (a), various additives, or the like, such as, surfactants, thickeners, stabilizers, defoamers and colorants (pigments, dyes and the like).

In the techniques described herein, the water-dispersed PSA composition for the purpose of forming the PSA layer contains an acrylic polymer emulsion obtained by emulsion polymerization. The acrylic polymer is used as a base polymer that constitutes the PSA layer (the base component of the PSA, typically, a component occupying 50% by mass or greater among the polymer component that constitutes the PSA). For instance, it is desirable that the 50% by mass or greater of the PSA is the acrylic polymer. As such an acrylic polymer, one that has been obtained by emulsion polymerization of monomer raw materials containing at least alkyl(meth)acrylate as the main monomer and a monomer having a carboxyl group as a co-polymerizing monomer may be adopted preferably. Here, main monomer means a monomer that occupies 50% by mass or greater of the total amount of the monomer components that constitute the acrylic polymer.

Note that herein, "(meth)acrylate" is meant to indicate acrylate and methacrylate comprehensively. Similarly, meant to indicate comprehensively are, respectively, "(meth)acryloyl" for acryloyl and methacryloyl, and "(meth)acrylic" for acrylic and methacrylic.

As alkyl(meth)acrylate, for instance, the compound represented by the following formula (1) can be used suitably.

CH₂ = C (R¹) COOR² (1)

Here, in the above formula (1), R¹ is a hydrogen atom or a methyl group. In addition, R² is an alkyl group having 2 to 14 carbons. As concrete examples of R², ethyl group, propyl group, isopropyl group, n-butyl group, isobutyl group, s-butyl group, t-butyl group, pentyl group, isoamyl group, neopentyl group, hexyl group, heptyl group, octyl group, isooctyl group, 2-ethyl hexyl group, nonyl group, isononyl group, decyl group, isodecyl group, bornyl group, isobornyl group, undecyl group, dodecyl group, tridecyl group, tetra decyl group, and the like, may be cited. Among them, alkyl(meth)acrylate, in which R² is a chain alkyl group (may be a straight chain or may be branched) having 2 to 10 carbons, is desirable. As particularly desirable R², butyl group and 2-ethyl hexyl group are given as examples.

As such alkyl(meth)acrylates, for instance, ethyl(meth)acrylate, propyl(meth)acrylate, isopropyl(meth)acrylate, butyl(meth)acrylate, isobutyl(meth)acrylate, s-butyl(meth)acrylate, t-butyl(meth)acrylate, pentyl(meth)acrylate, isoamyl(meth)acrylate, neopentyl(meth)acrylate, hexyl(meth)acrylate, heptyl(meth)acrylate, octyl(meth)acrylate, isooctyl(meth)acrylate, 2-ethyl hexyl(meth)acrylate, nonyl(meth)acrylate, isononyl(meth)acrylate, decyl(meth)acrylate, isodecyl(meth)acrylate, bornyl(meth)acrylate, isobornyl(meth)acrylate, undecyl(meth)acrylate, dodecyl(meth)acrylate, tridecyl(meth)acrylate, tetra decyl(meth)acrylate, and the like, may be cited. As particularly desirable examples, n-butyl acrylate (BA) and 2-ethyl hexyl acrylate (2-EHA) are given as examples. These alkyl(meth)acrylates can be used alone or in combination of two species or more. For instance, as the main monomer, BA may be used alone, 2-EHA may be used alone, two species of only BA and 2-EHA may be used, or another alkyl(meth)acrylate may be used in addition to the combination of BA and 2-EHA. When using as the main monomer at least BA and 2-EHA in combination, it suffices to select the proportion of BA in the total amount thereof from a range of, for instance, 40% by mass or greater and less than 100% by mass (for instance, 40% by mass to 95% by mass or 45% by mass to 95% by mass) and suitably determine the amount of 2-EHA according to this.

The proportion of the alkyl(meth)acrylate with respect to the total amount of the monomer components that constitute the acrylic polymer may be on the order of 80% by mass or greater (for instance, about 80 to 99.8% by mass), and preferably about 85% by mass or greater (for instance, about 85 to 99.5% by mass). The proportion of alkyl(meth)acrylate may about 90% by mass or greater (for instance, about 90 to 99% by mass).

The monomer raw material contains as monomer components, in addition to the main monomer alkyl(meth)acrylate, at least a monomer (β) that has a carboxyl group as a co-polymerizing monomer. As carboxyl group-containing co-polymerizing monomer (monomer (β)), for instance, ethylenic unsaturated monocarboxylic acids such as acrylic acid, methacrylic acid and crotonic acid; ethylenic unsaturated dicarboxylic acids such as maleic acid, itaconic acid and citraconic acid, and anhydrides thereof (maleic anhydride, itaconic anhydride, and the like) may be cited. As particularly preferred examples, acrylic acid and methacrylic acid may be cited. These carboxyl group-containing monomers may be used alone or in combination of two species or more.
The amount of the monomer (β) contained in the monomer component can be about 1 to 20 parts by mass (preferably 2 to 15 parts by mass) with respect to 100 parts by mass of the alkyl(meth)acrylate.
Such a constitution allows the anchoring ability of the PSA layer to the undercoat-layered substrate to be raised by the crosslinking reaction of a carboxyl group derived from the monomer (β) and an oxazoline group of the compound (a) contained in the undercoat layer.

As necessary, the above-mentioned monomer raw material may further contain one, two or more species of another co-polymerizing monomer for the purpose of introducing a crosslinking point within the acrylic polymer (typically a heat crosslinking functional group that can crosslink by heating). This allows PSA properties such as adhesive strength against the adherend to be raised as necessary. As functional groups that are contained in such co-polymerizing monomers and may become the crosslinking point, for instance, hydroxyl group, amide group, amino group, epoxy group, cyano group, nitrogen atom-containing heterocycle, and the like, may be cited.

As hydroxyl group-containing co-polymerizing monomers, for instance, hydroxyalkyl(meth)acrylates such as 2-hydroxyethyl(meth)acrylate, 2-hydroxypropyl(meth)acrylate, 3-hydroxypropyl(meth)acrylate and 4-hydroxybutyl(meth)acrylate; unsaturated alcohols such as vinyl alcohol and allyl alcohol; and the like, may be cited.

As amide group-containing co-polymerizing monomers, for instance, (meth)acrylamide, N,N-dimethyl(meth)acrylamide, N-butyl(meth)acrylamide, N-methylol(meth)acrylamide, N-methylol propane (meth)acrylamide, N-methoxy methyl(meth)acrylamide, N-butoxy methyl(meth)acrylamide, and the like, may be cited.
As amino group-containing co-polymerizing monomers, for instance, aminoethyl(meth)acrylate, N,N-dimethylaminoethyl(meth)acrylate, t-butylaminoethyl(meth)acrylate, and the like, may be cited.

As epoxy group-containing co-polymerizing monomers, for instance, glycidyl(meth)acrylate, methylglycidyl(meth)acrylate, allylglycidyl ether, and the like, exist.
As cyano group-containing co-polymerizing monomers, for instance, acrylonitrile, methacrylonitrile, and the like, may be cited.

As co-polymerizing monomers having a nitrogen atom-containing heterocycle: for instance, N-vinyl-2-pyrrolidone, N-methyl vinyl pyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam and N-(meth)acryloylmorpholine, and the like may be cited.

The monomer raw material may further contain as monomer components, one, two or more species of co-polymerizing monomers for the purpose of raising PSA properties such as cohesive strength. As such co-polymerizing monomers, for instance, methyl(meth)acrylate; vinyl esters such as vinyl acetate; aromatic vinyl compounds such as styrene and vinyl toluene; (meth)acrylic acid esters of cyclic alcohols such as cyclopenthyl (meth)acrylate and isobornyl(meth)acrylate; (meth)acrylic acid esters of polyalcohols such as neopentyl glycol di(meth)acrylate, hexanediol di(meth)acrylate, propylene glycol di(meth)acrylate, trimethylol propane tri(meth)acrylate, tetramethylol methane tri(meth)acrylate, dipentaerythritol hexa(meth)acrylate; and the like, may be cited.

The total amount of these co-polymerizing monomer components with the monomer (β) combined can be, for instance, about 0.5 to 12 parts by mass (preferably 1 to 8 parts by mass) with respect to 100 parts by mass of alkyl(meth)acrylate (main monomer).

The water-dispersed solution of acrylic polymer is obtained by emulsion polymerization of the monomer components according to methods that are well known or in common use. For instance, a portion or the entirety of the monomer component (typically, the entirety) can be pre-emulsified in water using a suitable amount of an emulsifier, and the resulting emulsion (monomer emulsion) can be supplied to a reaction container containing water and constituents such as a polymerization initiator by adopting suitably, a single-loading method that supplies the entirety of the monomer components in a single time, a continuous supply (drip) method that continuously supplies by small amounts, a fractional supply (drip) method that supplies by dividing into several times, or the like. The monomer concentration of the monomer emulsion can be in general 30 to 90% by mass.

The polymerization temperature can be selected suitably according to the species of the monomer used, the species of the polymerization initiator, and the like, and can be, for instance, on the order of about 20°C to 100°C (preferably on the order of 30°C to 90°C and typically on the order of 40°C to 80°C). In addition, polymerization time can be in general about 3 hours to 24 hours.

The polymerization initiator used for the polymerization can be used by choosing from polymerization initiators that are well known or in common use. For instance, an azo polymerization initiator may be used preferably. Examples of azo initiators include 2,2'-azobisisobutylonitrile, 2,2'-azobis(2-methylpropionamidine) disulfate, 2,2'-azobis(2-amidino propane) dihydrochloride, 2,2'-azobis[2-(5-methyl-2-imidazoline-2-yl)propane] dihydrochloride, 2,2'*-azobis(N,N'*-dimethyleneisobutylamidine), 2,2'-azobis[*N*-(2-carboxyethyl)-2-methylpropionamidine] hydrate, and the like. These azo polymerization initiators dissolve relatively readily in water, and are used preferably for emulsion polymerization.

As other initiators that may be used, for instance, persulfates such as potassium persulfate and ammonium persulfate; peroxides such as benzoyl peroxide, t-butyl hydroperoxide and hydrogen peroxide; substituted ethane initiators such as phenyl-substituted ethane; aromatic carbonyl compounds; redox initiators such as combination of persulfate and sodium hydrogen sulfite and combination of peroxide and sodium ascorbate, and the like, may be cited.
These polymerization initiators can be used alone or in combination of two species or more. The amount of polymerization initiator used suffices to be an amount used in general, which can be, for instance, on the order of about 0.005 to 1 parts by mass with respect to 100 parts by mass of the total amount of monomer components.

The emulsifier for carrying out the emulsion polymerization may be either of an anionic emulsifier and a non-ionic emulsifier. As anionic emulsifiers, for instance, sodium lauryl sulfate, ammonium lauryl sulfate, sodium dodecylbenzene sulfonate, sodium polyoxyethylene alkyl ether sulfate, ammonium polyoxyethylene alkyl ether sulfate, ammonium polyoxyethylene alkyl phenyl ether sulfate, sodium polyoxyethylene alkyl phenyl ether sulfate, and the like, may be cited. As non-ionic emulsifiers, for instance, polyoxyethylene alkyl ether, polyoxyethylene alkyl phenyl ether, and the like, may be cited.
These emulsifiers can be used alone or in combination of two species or more. The amount of emulsifier used can be for instance about 0.2 to 10 parts by mass (more preferably 0.5 to 5 parts by mass) with respect to 100 parts by mass of the total amount of monomer raw materials (monomer components).

In addition, when performing the emulsion polymerization, a chain transfer agent may be used in order to adjust the molecular weight of the acrylic polymer generated by the polymerization. As chain transfer agents, for instance, mercaptans such as 1-dodecane thiol, tertiary lauryl mercaptan, mercaptoacetic acid, 2-mercaptoethanol, 2-ethylhexyl thioglycolate and 2,3-dimercapto-1-propanol can be used preferably. Such chain transfer agents can be used alone or in combination of two species or more. The mixing proportion of chain transfer agent can be, for instance, about 0.001 to 0.5 parts by mass with respect to 100 parts by mass of the monomer components.

As necessary, a crosslinking agent may be mixed in the PSA composition. The species of crosslinking agent is not limited in particular, and crosslinking agents that are well known and in common use can be used. As concrete examples, silane crosslinking agents, isocyanate crosslinking agents, epoxy crosslinking agents, oxazoline crosslinking agents, aziridine crosslinking agents, metal chelate crosslinking agents, and the like, may be cited. While either of oil-soluble and water-soluble crosslinking agents can be used, from the point of view of decreasing the amount of VOCs, the use of a water-soluble crosslinking agent is preferred.

As necessary, the PSA composition may contain an acid or a base for the purpose of pH adjustment or the like. In general, a PSA composition having a pH adjusted to about 7 to 9 with a base (ammonia water or the like) to stabilize the emulsion particles of the PSA composition is preferably used. However, after pH adjustment, if the amount of ammonia remaining in the PSA composition is excessive, sometimes the PSA layer formed from the composition becomes remarkably heavier to release from the release liner described below. In order to suppress such a heavy release phenomenon, it is more desirable to reduce the amount of ammonia added and bring the pH to about 7 to 8.

As the water-dispersed PSA composition in the technique disclosed herein, it is also possible to use one that has been prepared using an acrylic polymer synthesized by a method other than the emulsion polymerization described above, which has been dispersed in water typically with an emulsifier.

The water-dispersed PSA composition further contains about 5 to 100 parts by mass (more preferably 10 to 80 parts by mass) of a water-dispersed tackifier (water-dispersion of tackifier) with respect to 100 parts by mass of the acrylic polymer (all as solid content). As the water-dispersed tackifier, those that are well known and in common use can be used. For instance, a water-dispersed solution of one, two or more species selected from rosin resin, terpene resin, aliphatic petroleum resin, aromatic petroleum resin, copolymerized petroleum resin, alicyclic petroleum resin, xylene resin, elastomer, and the like, can be used. In this way, using both the acrylic polymer and the tackifier in water-dispersed forms, a PSA sheet with a highly reduced VOCs emission may be realized.

As a desirable example of the tackifier, stabilized rosin ester resin may be cited. As such a rosin ester resin, a rosin ester obtained for instance by performing stabilization treatment such as disproportionation or hydrogenation and purification treatment on the raw material rosin to stabilize and further esterifying with an alcohol, can be used. The stabilization treatment may be carried out after the purification treatment has been performed, and the order may be reversed. Note that the purification treatment means removing macromolecular compounds derived from peroxides contained in the raw material rosin, unsaponified matters contained originally in the starting material rosin, and the like, by distillation, recrystallization, extraction or the like.

As the stabilized rosin ester resin, those prepared by esterification reaction of the stabilized rosin with various polyalcohols may be used. As polyalcohols, for instance, diols such as ethylene glycol and propylene glycol; triols such as glycerin and trimethylol propane; tetrols such as pentaerythritol; and the like, may be cited.
The esterification reaction can directly adopt methods that are well known and in common use. For instance, it can be carried out under an inert gas atmosphere at about normal atmospheric pressure by reacting a mixture of the stabilized rosin and polyalcohol at about 150 to 300°C and removing the generated water out of the system. During such an esterification reaction or after the reaction, dehydrogenation treatment may be performed by way of methods and under conditions that are well known and in common use. For instance, when the dehydrogenation treatment is to be carried out after the esterification reaction, the method whereby, in the presence of a well known dehydrogenation catalyst such as palladium catalysts, rhodium catalysts or platinum catalysts, the resulting rosin ester is heated under pressure, or the like, can be adopted. Alternatively to the dehydrogenation treatment, hydrogenation treatment may be performed.

As commercial products of water-dispersed tackifiers containing such stabilized rosin ester resins, for instance, product names "SUPER ESTER E-720" and "SUPER ESTER E-730-55" manufactured by Arakawa Chemicals, Ltd., product names "HARIESTER SK-90D", "HARIESTER SK-70D", "HARIESTER SK-70E" and "NEOTALL 115E" manufactured by Harima Chemicals, Inc, and the like, may be cited.

As other preferred examples of the tackifier, terpene-phenol resins from the phenylation of terpene resins such as a-pinene polymer, (β-pinene polymer or diterpene polymer may be cited. As commercial products of terpene-phenol tackifier that may be used preferably (may be of a water-based emulsion morphology), product names "TAMANOL E-100", "TAMANOL E-200" and "TAMANOL E-200NT", manufactured by Arakawa Chemical Industries, Ltd., and the like, may be cited.

In addition to such constituents as those described above, as necessary, the PSA composition may further contain as other constituents various additives normally used in the PSA field, for instance, anti-aging agent, filler, colorant (pigment, dye and the like), pH buffering agent, neutralization agent, anti-foaming agent (defoamers), stabilizer, antioxidant, UV absorbent, and the like. The mixing proportion of these additives can be selected suitably within a range that does not impair water-resistance.

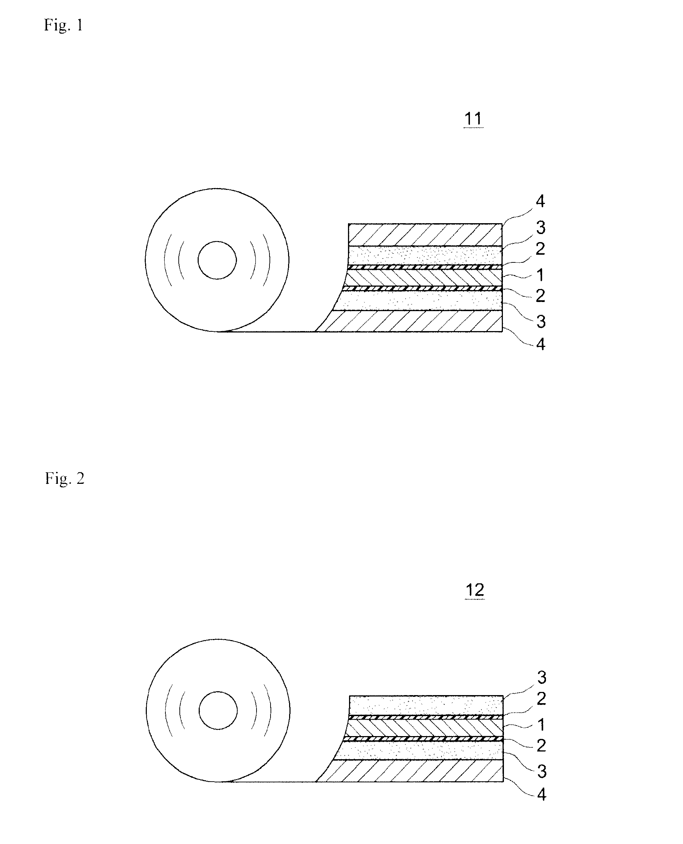

The PSA sheet disclosed herein for instance may have the cross-sectional structures schematically shown in Fig. 1 to 2.
PSA sheet 11 shown in Fig. 1 presents a morphology that is adhesive on both sides, in which an undercoat layer 2 is provided on each side of a substrate 1, and a PSA layer 3 is further provided over each undercoat layer 2. Each PSA layer 3 is protected by a release liner 4 that is peelable (releasable) at least on the PSA layer side.
Similarly to the PSA sheet 11, PSA sheet 12 shown in Fig. 2 presents a morphology that is adhesive on both sides, and a first PSA layer is protected by a release liner 4 that is peelable on each side. Such PSA sheet 12 can have a constitution in which, by being wound, a second PSA layer is also protected by the release liner 4.
In Figs. 1 and 2, the undercoat layers 2 provided on each side of the substrate 1 may be identical or different. Similarly, the PSA layers 3 provided on each side of the substrate 1 may be identical or different.

The PSA layers in the techniques disclosed herein may be prepared by a variety of methods. For instance, by applying either method selected from the method whereby a PSA composition is applied directly on each side of a substrate 1 provided with an undercoat layer 2 each, and dried or cured to form a PSA layer 3 (PSA film) (direct method), and the method whereby a PSA layer 3 formed on the releasable side of a release liner is pressure-bonded (attached) onto a substrate 1 provided on each side with an undercoat layer 2 to transfer the PSA layer 3 onto the substrate (transfer method), the PSA layer 3 can be formed on each side of a substrate 1 provided with the undercoat layers 2.

When applying (typically, coating) a PSA composition, similar coaters to those described above for undercoat layer formation can be used. The thickness of the PSA layer (after drying) is not limited in particular and may be, for instance about 2 µm to 200 µm (preferably about 10 µm to 100 µm).

After the PSA layer has been formed in this way, as necessary, a treatment is carried out to crosslinking the oxazoline group present in the undercoat layer and the carboxyl group present in the PSA layer. Such a treatment can be carried out, for instance, by heating the formed PSA sheet at a temperature where the crosslinking reaction proceeds according to the undercoat agent species or the like. In addition, if a crosslinking point has been introduced using another heat crosslinking co-polymerizing monomer described above, a treatment suitable to the crosslinking reaction of this co-polymerizing monomer can be carried out simultaneously or separately. These crosslinking steps may be carried out along with the drying step.

The solvent-insoluble fraction of the PSA layer after crosslinking may be, for instance, about 15 to 70% by mass. In addition, the molecular weight (weight average molecular weight converted to standard polystyrene) of the solvent-soluble fraction of the PSA layer after crosslinking may be, for instance, about 1×10⁵ to 6×10⁵ (2×10⁵ to 4.5× 10⁵). The molecular weight can be adjusted by selecting suitably the species or the amounts of the chain transfer agents or the carboxyl group-containing monomers and other co-polymerizing monomers.

The release liner 4 contains a support (substrate) and a release layer (release coating) provided on one side or each side thereof. The material of the substrate for this release liner is not limited in particular, and, for instance, a single layer body formed from plastics, papers, various fibers, rubbers, foams, metal foils and the like, or a laminate thereof, can be used. In addition, the release layer can be formed using various silicone releasing agents which are thermosetting, ionizing radiation curing or the like. The thickness of the release liner is not limited in particular and is preferably 15 µm or greater and more preferably about 25 µm to 500 µm.

For the PSA sheet disclosed herein, the toluene emission when the sheet has been heated at 80°C for 30 minutes (hereinafter, may be simply referred to as "toluene emission") is 20 µg per gram of the sheet (hereinafter, this may be represented by "20 µg/g" or the like) or less (property (A)). The toluene emission is preferably 10 µg/g or less and more preferably 5 µg/g or less. If the toluene emission is excessively larger than 20 µg/g, when performing work using the PSA sheet, when using a product in which the sheet is used, or the like, the sanitary environment thereof may deteriorate.

For the PSA sheet disclosed herein, it is desirable that, in addition, ethyl acetate emission when the sheet has been heated at 80°C for 30 minutes is 20 µg/g or less (property (G)), and/or the TVOC amount when the sheet has been heated at 80°C for 30 minutes is 500 µg/g or less (property (H)).
The ethyl acetate emission is more preferably 10 µg/g or less and even more preferably 5 µg/g or less. If the ethyl acetate emission is excessively larger than 20 µg/g, the sanitary environment described above sometimes deteriorates.
The TVOC amount is more preferably 300 µg/g or less and even more preferably 150 µg/g or less. If the TVOC amount is excessively larger than 500 µg/g, the sanitary environment described above sometimes deteriorates.
Note that, the values obtained by the following measurement methods are adopted as the toluene emission, the ethyl acetate emission and the TVOC amounts.

### [Measurement ofVOCs Emission]

From a double-sided PSA sheet to be subjected to the measurement, a sample of a prescribed size (for instance, a surface area of about 1 cm² to 10 cm²) is cut out, each PSA side is exposed by removing the release liner or the like, placed in a vial bottle of a prescribed volume (for instance, about 20 mL) and sealed hermetically. Using a headspace sampler (HSS), this sample-containing vial bottle is kept at 80°C for 30 minutes, then, a prescribed amount (for instance, 1 mL) of gas sample in the vial bottle is injected into a gas chromatograph (GC). Then, quantification of each volatile organic compound, such as toluene, ethyl acetate and the like, is carry out. It suffices to select the quantification method suitably according to the device to be used or the like. For instance, a sample comprising a known quantity of toluene diluted with acetone is subjected to GC measurement, a calibration curve is created from the peak surface area of the GC chart obtained, and quantification of toluene is carried out from the calibration curve. Then, from this result, the toluene emission per gram of the sheet (µg/g) is calculated. Determination and calculation can be performed similarly for ethyl acetate emission (µg/g). Emission of other volatile organic compound constituents can be determined and calculated from the peak surface area of each constituent, using the calibration curve obtained in the toluene quantification. The TVOC amount is determined by totaling the toluene emission, the ethyl acetate emission and the emission of other constituents.

Hereafter, a number of examples according to the present invention will be described; however, the present invention is not intended to be limited to those indicated in examples. Note that in the following description, mass is the criteria for "part" and "%" unless expressly indicated otherwise.

### <Example 1>

Into a reaction vessel equipped with a condenser, a nitrogen inlet tube, a thermometer and a stirrer, were added 30 parts of ion exchanged water and 0.1 parts of 2,2'-azobis[N-(2-carboxyethyl)-2-methylpropionamidine] hydrate (product name "VA-057", Wako Pure Chemical Industries, Ltd.), and nitrogen exchange was performed while stirring at 60°C for one hour. Emulsified with 70 parts of ion exchanged water were 70 parts of BA, 25 parts of 2-EHA, 5 parts of acrylic acid, 0.05 parts of 3- methacryloxy propyl trimethoxy silane (product name "KBM-503", Shin-Etsu Chemical Co., Ltd.), 0.05 parts of dodecane thiol (chain transfer agent) and 1.5 parts (based on solid content) of sodium polyoxyethylene lauryl ether sulfate (emulsifier), the resulting monomer emulsion was dripped over 4 hours into the reaction vessel, which had been maintained at 60°C, and further maintained at 60°C for 3 hours. In order to adjust to pH 8, 10% ammonia water was added to this reaction mixture, then, with respect to 100 parts of solid contents in the reaction mixture, 20 parts (based on solid content) of product name "TAMANOL E-100" (a water-dispersion of a terpene phenol resin) manufactured by Arakawa Chemical Industries, Ltd. was added as a water-dispersed tackifier to obtain a water-dispersed PSA composition.

Over a first side of a 23 µn-thick PET film (product name "LUMIRROR S 10", Toray Industries, Inc.) (substrate) treated by corona discharge on each side, product name "EPOCROS K-2020E" (oxazoline group-containing acrylic water-based emulsion) manufactured by Nippon Shokubai Co., LTD. was coated as an undercoat agent (X) in such a way that the thickness after drying became 0.1 µm, and dried at 100°C for I minute to form a first undercoat layer on the substrate (on the first side thereof). A second undercoat layer was formed in a similar manner on the second side of the substrate. The water contact angle of the formed undercoat layer surface was 87 degrees (mean value of the two sides). This water contact angle (10 seconds after a droplet landed) was measured using an automatic contact angle meter (model "CA-V" manufactured by Kyowa Interface Science Co., LTD.) and according to the droplet method. Note that the measurements were carried out similarly for Examples 2 to 10.
Over the first side of the resulting substrate (over the first undercoat layer), the above PSA composition was coated in such a way that the thickness after drying became 60 µm, and dried at 120°C for 3 minutes to form the first PSA layer. A release liner coated with a silicone release agent was pressure-bonded onto this first PSA side. Next, a second PSA layer was formed on the second side of the substrate (over the second undercoat layer) in a similar manner to the first side to obtain a PSA sheet that is adhesive on both sides according to Example 1.

### <Example 2>

Into a reaction vessel equipped with a condenser, a nitrogen inlet tube, a thermometer and a stirrer, were added 30 parts of ion exchanged water and 0.3 parts of ammonium persulfate, and nitrogen exchange was performed while stirring at 80°C for one hour. Emulsified with 70 parts of ion exchanged water were 80 parts of BA, 15 parts of 2-EHA, 3 parts of acrylic acid, 2 parts of methacrylic acid, 0.05 parts of 3- methacryloxy propyl trimethoxy silane (product name "KBM-503", Shin-Etsu Chemical Co., Ltd.), 0.05 parts of dodecane thiol (chain transfer agent) and 1.5 parts (based on solid content) of ammonium polyoxyethylene lauryl ether sulfate (product name "HITENOL LA-16", Dai-Ichi Kogyo Seiyaku Co., LTD.) (emulsifier), the resulting monomer emulsion was dripped over 3 hours into the reaction vessel, which had been kept at 80°C, and further kept at 80°C for 2 hours. In order to adjust to pH 8, 10% ammonia water was added to this reaction mixture, then, with respect to 100 parts of solid contents in the reaction mixture, 20 parts (based on solid content) of product name " SUPER ESTER E-720" (a water-dispersion of a stabilized rosin ester resin) manufactured by Arakawa Chemical Industries, Ltd., was added as a water-dispersed tackifier to obtain a water-dispersed PSA composition.

Over a first side of a 50 µm-thick PET film (product name "LUMIRROR S 10", Toray Industries, Inc.) (substrate) treated by corona discharge on each side, product name "EPOCROS K-2010E" (oxazoline group-containing acrylic water-based emulsion) manufactured by Nippon Shokubai Co., LTD. was coated as an undercoat agent (Y) in such a way that the thickness after drying became 1.0 µm, and dried at 100°C for 1 minute to form a first undercoat layer on the substrate (on the first side thereof). A second undercoat layer was formed in a similar manner on the second side of the substrate. Note that the water contact angle of this undercoat layer surface was 82 degrees.
Over the first side of the resulting substrate (over the first undercoat layer), the PSA composition was coated in such a way that the thickness after drying became 60 µm, and dried at 120°C for 3 minutes to form the first PSA layer. A release liner coated with a silicone release agent was pressure-bonded onto this first PSA side. Next, a second PSA layer was formed on the second side of the substrate (over the second undercoat layer) in a similar manner to the first side to obtain a PSA sheet that is adhesive on both sides according to Example 2.

### <Example 3>

A PSA sheet that is adhesive on both sides according to Example 3 was obtained in a similar manner to Example 1, except that a 2.0 µm-thick PET film was used. Note that the water contact angle of the undercoat layer surface in the present example was 86 degrees.

### <Example 4>

A PSA sheet that is adhesive on both sides according to Example 4 was obtained in a similar manner to Example 1, except that a 250 µm-thick PET film was used. Note that the water contact angle of the undercoat layer surface in the present example was 88 degrees.

### <Example 5>

A PSA sheet that is adhesive on both sides according to Example 5 was obtained in a similar manner to Example 1, except that product name "EPOCROS WS-700" (water solution of oxazoline group-containing acrylic polymer) manufactured by Nippon Shokubai Co., LTD. was used as an undercoat agent (Z). Note that the water contact angle of the undercoat layer surface in the present example was 75 degrees.

### <Example 6>

A PSA sheet that is adhesive on both sides according to Example 6 was obtained in a similar manner to Example 1, except that a 342 µm-thick PET film was used. Note that the water contact angle of the undercoat layer surface in the present example was 85 degrees.

### <Example 7>

A PSA sheet that is adhesive on both sides according to Example 7 was obtained in a similar manner to Example 2, except that no corona discharge treatment was performed and no undercoat layer was formed on either side of the substrate. Note that the water contact angle of the substrate surface in the present example (no undercoat) was 119 degrees.

### <Example 8>

A PSA sheet that is adhesive on both sides according to Example 8 was obtained in a similar manner to Example 1, except that no corona discharge treatment was performed and no undercoat layer was formed on either side of the substrate. Note that the water contact angle of the substrate surface in the present example (no undercoat) was 119 degrees.

### <Example 9>

Into a reaction vessel equipped with a condenser, a nitrogen inlet tube, a thermometer and a stirrer, 95 parts of BA, 5 parts of acrylic acid, and 150 parts of toluene were introduced, and nitrogen exchange was performed while stirring at room temperature (23°C) for one hour. This reaction mixture was heated to 60°C and 0.2 parts of 2,2'-azobisisobutyronitrile (polymerization initiator) was added. While maintaining the system at 63°C, the polymerization reaction was carried out for seven hours to synthesize an acrylic polymer. The weight average molecular weight of this acrylic polymer was 5×l0⁵ Based on solid content, with respect to 100 parts of this reaction mixture, 30 parts of product name "NIKANOL H-80" (xylene formaldehyde tackifier resin) manufactured by Mitsubishi Gas Chemical Company, Inc., 0.05 parts of product name "EDP-300" (hydroxy compound containing a nitrogen atom) manufactured by Asahi Denka, and 4 parts of product name "CORONATE L" (isocyanate compound) manufactured by Nippon Polyurethane Industry Co., LTD. were added and thoroughly mixed to obtain a PSA composition.
Over a first side of a 24 µm-thick PET film (substrate) untreated on either side (neither corona discharge nor undercoat treatment performed), the PSA composition was coated in such a way that the thickness after drying became 60 µm, and dried at 1 1 0°C for 3 minutes to form a first PSA layer. A release liner coated with a silicone release agent was pressure-bonded onto this first PSA side. Next, a second PSA layer was formed on the second side of the substrate, in a similar manner to the first side to obtain a PSA sheet that is adhesive on both sides according to Example 9. Note that the water contact angle of the substrate surface in the present example (no surface modification; no undercoat) was 125 degrees.

### <Example 10>

Into a reaction vessel equipped with a condenser, a nitrogen inlet tube, a thermometer and a stirrer, 95 parts of BA, 5 parts of acrylic acid, and 250 parts of ethyl acetate were introduced, and nitrogen exchange was performed while stirring at room temperature (23°C) for one hour. This reaction mixture was heated to 60°C and 0.2 parts of 2,2'-azobisisobutyronitrile (polymerization initiator) was added. While maintaining the system at 63°C, the polymerization reaction was carried out for seven hours to synthesize an acrylic polymer. The weight average molecular weight of this acrylic polymer was 8×10⁵. Based on solid content, with respect to 100 parts of this reaction mixture, 30 parts of product name "NIKANOL H-80" (xylene formaldehyde tackifier resin) manufactured by Mitsubishi Gas Chemical Company, Inc., 0.05 parts of product name "EDP-300" (hydroxy compound containing a nitrogen atom) manufactured by Asahi Denka, and 4 parts of product name "CORONATE L" (isocyanate compound) manufactured by Nippon Polyurethane Industry Co., LTD. were added and thoroughly mixed to obtain a PSA composition.
Over a first side of a 24 µm-thick PET film (substrate) untreated on either side (neither corona discharge nor undercoat treatment performed), the PSA composition was coated in such a way that the thickness after drying became 60 µm, and dried at 110°C for 3 minutes to form a first PSA layer. A release liner coated with a silicone release agent was pressure-bonded onto this first PSA side. Next, a second PSA layer was formed on the second side of the substrate, in a similar manner to the first side to obtain a PSA sheet that is adhesive on both sides according to Example 10. Note that the water contact angle of the substrate surface in the present example (no surface modification; no undercoat) was 125 degrees.
The following measurements were performed on the PSA sheets of Example 1 to 10.

### [VOCs emission]

For each PSA sheet, toluene emission, ethyl acetate emission and TVOC amount when kept at 80°C for 30 minutes were measured according to the measurement methods described above. The results are shown in Table 1. Note that the settings for HSS and GC were as follows:
HSS: Model "7694" manufactured by Agilent Technologies
Oven temperature: 80°C
Heating time: 30 minutes
Pressurization time: 0.12 minutes
Loop filling time: 0.12 minutes
Loop equilibration time: 0.05 minutes
Injection time: 3.00 minutes
Sample loop temperature: 160°C
Transfer line temperature: 200°C
GC: Model "6890" manufactured by Agilent Technologies
Column: J&W capillary column product name "DB-ffAP" (0.533 mm internal diameter × 30 m length, 1.0 µm membrane thickness) manufactured by GL Sciences, Inc.
Carrier gas: helium 5.0 mL/ minute
Column pressure: 24.3 kPa (constant flow mode)
Injection port temperature: 250°C
Detector: FID
Detector temperature: 250°C

### [Anchoring ability]

The exposed PSA side (the second PSA side) of each PSA sheet was bonded onto a 23 µm-thick PET substrate and cut to 20 mm width and 100 mm length to prepare a test piece. The release liner was peeled from this test piece, the exposed first PSA side was pressure-bonded to a stainless steel (SUS) plate that had been polished with a No. 360 grit sanding paper, and a rubber roller weighing 2 kg was made to travel back and forth once over the piece. This was kept at 80°C for 1 hour, then cooled to room temperature (23°C), peeled at 30 m/minute peel speed and 180° peel angle, and the adhesive deposit surface area (%) was measured. The adhesive deposit surface area was the percentage of surface area of PSA layer remaining on the SUS plate after peeling with respect to a 20 mm width × 100 mm length surface area.

### <Curved-surface-conforming ability>

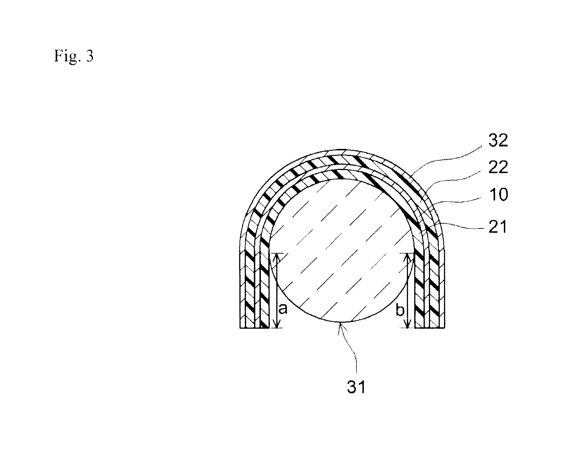

A test piece was prepared by cutting each PSA sheet to a size of 10 mm width × 80 mm length. The first release liner was peeled off from this test piece and the exposed adhesive side (PSA layer 21) was pasted along the circumference of a 35 mm diameter × 80 mm length (height) glass cylinder 31, which was pressure bonded with a 1 kg roller traveling back and forth once along the circumference (Fig. 3). After this was maintained under an environment of 23°C for 24 hours, the lengths a and b (mm) of each extremity resulting from the test piece peeling off and lifting from the cylinder were measured, and the sum thereof (a+b) served as the curved-surface-conforming ability.

### [180° peel strength against SUS]

The exposed PSA side (the second PSA side) of each PSA sheet was bonded onto a 23 µm-thick PET substrate and cut to 20 mm width and 100 mm length to prepare a test piece. The release liner was peeled from this test piece, the exposed first PSA side was pressure-bonded (attached) to a SUS plate that had been polished with a No. 280 grit sanding paper, and a rubber roller weighing 2 kg was made to travel back and forth once over the piece. This was retained at 23°C under an atmosphere of 50% RH for 30 minutes, then, in this atmosphere, a tensile tester was used to measure the 180° peel strength against SUS under the conditions of 180° peel angle and 300 mm/minute pull speed, in accordance with JIS Z 0237.

The results of the measurements from these property tests, along with the results of measurements regarding the substrates and undercoat layers, are shown in Table 2. Note that the breaking strength and the elongation at break of the substrate used in each example were measured on an untreated substrate, in accordance with JIS C 2151.

### [Table 1]

**Table 1**

| | Amount of VOC emitted | | |
|---|---|---|---|
| Ex. | Toluene | Ethyl acetate | TVOCs |
| | (µg/g) | (µg/g) | (µg/g) |
| 1 | <0.5 | <0.5 | 109 |
| 2 | <0.5 | <0.5 | 81 |
| 3 | <0.5 | <0.5 | 135 |
| 4 | <0.5 | <0.5 | 41 1 |
| 5 | <0.5 | <0.5 | 35 5 |
| 6 | <0.5 | <0.5 | 119 |
| 7 | <0.5 | <0.5 | 88 |
| 8 | <0.5 | <0.5 | 105 |
| 9 | 2220 | 82 | 2510 |
| 10 | <0.5 | 1620 | 1880 |

As shown in Table 1, for the PSA sheets of Examples 1 to 8, which use water-dispersed PSA composition and tackifier, toluene emission and ethyl acetate emission were 20 µg/g or less (here, less than 0.5 µg/g), and TVOC amount was 500 µg/g or less (here, a range of 35 to 135 µg/g), both of which were low. In contrast, for the PSA sheet of Example 9, which uses a toluene as a solvent of PSA composition (solvent-type PSA composition), toluene emission and TVOC amount were both 2000 µg/g or greater, which was extremely high, and ethyl acetate emission was 82 µg/g, largely exceeding the preferred range. Similarly, for the PSA sheet of Example 10, which uses an ethyl acetate as a solvent of PSA composition (solvent-type PSA composition), although toluene emission was less than 0.5 µg/g, both ethyl acetate emission and TVOC amount were 1500 µg/g or greater, which was extremely high.

### [Table 2]

**Table 2**

| | Substrate | | | Undercoat layer | | | PSA layer | | |
|---|---|---|---|---|---|---|---|---|---|
| Ex. | Thickness (µm) | Breaking strength (MPa) | Elongation at break (%) | Type | Thickness (µm) | Water contact angle (degrees) | Adhesive strength (N/20 mm) | Contour-following ability (mm) | Adhesive deposit surface area (%) |
| 1 | 23 | 235 | 173 | X | 0.1 | 87 | 14.2 | 0 | 0 |
| 2 | 50 | 165 | 230 | Y | 1 | 82 | 15.5 | 0 | 0 |
| 3 | 2 | 356 | 75 | X | 0.1 | 86 | 13.2 | 0 | 0 |
| 4 | 250 | 191 | 199 | X | 0.1 | 88 | 17.8 | 34 | 0 |
| 5 | 23 | 235 | 173 | Z | 0.1 | 75 | 14.8 | 0 | 0 |
| 6 | 342 | 161 | 187 | X | 0.1 | 85 | 19.5 | 65 | 0 |
| 7 | 50 | 165 | 230 | Absent | - | 119 | 14.9 | 0 | 95 |
| 8 | 23 | 235 | 173 | Absent | - | 119 | 14.5 | 0 | 100 |
| 9 | 23 | 235 | 173 | Absent | - | 125 | 16.6 | 0 | 0 |
| 10 | 23 | 235 | 173 | Absent | - | 125 | 18.1 | 0 | 0 |

As shown in Table 2, for the PSA sheets of Examples 9 to 10, which use a solvent-type PSA composition, the adhesive deposit surface area was 0% in both cases, regardless of the fact that an untreated substrate, which was not provided an undercoat layer, was used. In contrast, for the PSA sheets of Examples 7 to 8, which use an untreated substrate and in which the PSA layer is formed from a water-dispersed PSA composition, the anchoring ability of the PSA layer was weak, with an adhesive deposit surface area of 95% or greater.
On the other hand, for the PSA sheets of Examples 1 to 6, which use a substrate provided with an undercoat layer, while being provided with a PSA layer formed from a water-dispersed PSA composition, the anchoring ability of the PSA layer improved remarkably, with an adhesive deposit surface area of 0% for all cases. In particular, for the PSA sheets of Examples 1 to 5, which use a 1 µm to 300 µm-thick substrate, contour-following ability was excellent for all, with a lifting distance a+b from the glass cylinder of 50 mm or less in the contour-following ability test. Among these, the PSA sheets of Examples 1 to 3 and 5, in which the thickness of the substrate was 200 µm or less all realized excellent contour-following ability and anchoring ability simultaneously, with 0 mm for a+b and 0% for the adhesive deposit surface area at re-detaching time.

With that, specific examples of the present invention were described in detail; however, these are mere illustrations and do not limit the scope of the claims. The art recited in the claims includes various variations of and modifications to the specific examples illustrated above.

## Claims

1. A double-sided pressure-sensitive adhesive sheet, comprising:
a plastic film substrate; and
a pressure-sensitive adhesive layer provided on each side of the substrate;
wherein all of the following conditions are satisfied:
the substrate has a thickness of 1 µm to 300 µm;
an undercoat layer formed from a water-based undercoat agent containing a compound having an oxazoline group is provided on each side of the substrate, and the pressure-sensitive adhesive layer is provided over this undercoat layer;
the pressure-sensitive adhesive layer is formed from a water-dispersed pressure-sensitive adhesive composition containing a water-dispersed acrylic polymer, and a water-dispersed tackifier at a mass ratio of 100:5 to 100 based on solid content; and
the water-dispersed acrylic polymer is synthesized by emulsion polymerization of a monomer raw material containing an alkyl(meth)acrylate as a main monomer and a monomer having a carboxyl group; and
the pressure-sensitive adhesive sheet satisfies the following property:
(A) when the pressure-sensitive adhesive sheet is kept at 80°C for 30 minutes, the amount of toluene emitted from the sheet is 20 µg or less per gram of the sheet.

2. The pressure-sensitive adhesive sheet according to Claim 1, which further satisfies the following properties:
(B) 180° peel strength against stainless steel plate is 10 N/20 mm or greater; and
(C) no adhesive deposit is present on a stainless steel plate in an anchoring ability test under which the pressure-sensitive adhesive sheet is attached to the stainless steel plate and kept at 80°C for one hour, cooled to room temperature, and then peeled at 30m/minute peel speed and 180° peel angle.

3. The pressure-sensitive adhesive sheet according to Claim 1 or 2, wherein the undercoat layer has a thickness of 0.01 µm or greater and less than 3 µm.

4. The pressure-sensitive adhesive sheet according to any one of Claims 1 to 3, which further satisfies the following property:
(D) the undercoat layer has a water contact angle of 0 degrees to 90 degrees.

5. The pressure-sensitive adhesive sheet according to any one of Claims 1 to 4, which further satisfies the following property:
(E) the substrate has a breaking strength of 130 MPa to 500 MPa.

6. The pressure-sensitive adhesive sheet according to any one of Claims 1 to 5, which further satisfies the following property:
(F) the substrate has an elongation at break of 50% to 300%.

7. The pressure-sensitive adhesive sheet according to any one of Claims 1 to 6, wherein the substrate is a polyester film.

8. The pressure-sensitive adhesive sheet according to any one of Claims 1 to 7, wherein the pressure-sensitive adhesive composition contains an acrylic polymer synthesized by emulsion polymerization using an azo initiator as a polymerization initiator.

9. The pressure-sensitive adhesive sheet according to any one of Claims 1 to 8, which further satisfies the following property:
(G) when the pressure-sensitive adhesive sheet is kept at 80°C for 30 minutes, the amount of ethyl acetate emitted from the sheet is 20 µg or less per gram of the sheet.

10. The pressure-sensitive adhesive sheet according to any one of Claims 1 to 9, which further satisfies the following property:
(H) when the pressure-sensitive adhesive sheet is kept at 80°C for 30 minutes, the total amount of volatile organic compounds emitted from the sheet is 500 µg or less per gram of the sheet.
